# EUROPÄISCHE PATENTSCHRIFT

(11) **EP 0 648 323 B1**
(45) Veröffentlichungstag und Bekanntmachung des Hinweises auf die Patenterteilung: **07.01.1999**
(21) Anmeldenummer: 94914332.5
(22) Anmeldetag: 09.05.1994
(51) Int. Cl.: F23L 15/00, F22D 1/36, F22G 1/04, F01K 17/06

(54) **DAMPFKRAFTANLAGE ZUR ERZEUGUNG ELEKTRISCHER ENERGIE**
STEAM POWER PLANT FOR GENERATING ELECTRIC POWER
CENTRALE THERMIQUE A VAPEUR PERMETTANT DE PRODUIRE DE L'ENERGIE ELECTRIQUE

(30) Priorität: 10.05.1993 DE 4315482; 15.10.1993 DE 4335216
(43) Veröffentlichungstag der Anmeldung: 19.04.1995
(73) Patentinhaber: SAARBERGWERKE AKTIENGESELLSCHAFT, 66111 Saarbrücken (DE)
(72) Erfinder: JOHÄNNTGEN, Uwe, D-66787 Wadgassen (DE); MARX, Franz, Josef, D-66606 St. Wendel (DE)
(86) Internationale Anmeldenummer: DE9400530
(87) Internationale Veröffentlichungsnummer: WO9427089

(56) Entgegenhaltungen:
- DE-A- 4 116 356
- GB-A- 2 138 555

## Beschreibung

Die Erfindung betrifft eine Dampfkraftanlage zur Erzeugung elektrischer Energie mit einem fossil befeuerten Kessel, einem Wasser-Dampf-Kreislauf zur Erzeugung von hochgespanntem, überhitztem Wasserdampf für eine Dampfturbine, einem Luftvorwärmer zur Übertragung von Rauchgaswärme auf die Gesamtmenge der benötigten Frischluft, sowie einem ersten Wärmetauschersystem mit einem von Rezirkulationsluft und einem von einem Wärmeträgermedium durchströmten Querschnitt, wobei der luftführende Querschnitt eingangsseitig mit dem Frischluftausgang des Luftvorwärmers und ausgangsseitig mit dem Frischlufteingang des Luftvorwärmers in Verbindung steht, einem zweiten Wärmetauschersystem zur Übertragung zumindest eines Teiles der vor der Entschwefelung im Rauchgas noch enthaltenen Restwärme auf die Frischluft und mit Einrichtungen zur Entstaubung, Entschwefelung und ggf. Entstickung der Rauchgase.

Bei bekannten mit fossilen, d. h. gasförmigen, flüssigen bzw. festen Brennstoffen betriebenen Dampfkraftanlagen sind die Wärmestromkapazitäten (Massenstrom x spezifische Wärmekapazität) des abzukühlenden Rauchgases und der anzuwärmenden Frischluft (Verbrennungsluft) unterschiedlich, so daß sich bei einer üblichen Temperaturdifferenz zwischen Rauchgas und Frischluft von rd. 30 K am warmen Ende des Luftvorwärmers am kalten Ende dieses Wärmetauschers eine Temperaturdifferenz von bis zu 90 K einstellt. Diese hohen Temperaturdifferenzen führen zu entsprechenden Exergierverlusten und wirken sich entsprechend nachteilig auf den Gesamtwirkungsgrad der Anlage aus.

Als weiterer Nachteil kommt hinzu, daß bei Dampfkraftanlagen, bei denen keine Möglichkeit zur weiteren Nutzung der noch auf relativ hohem Temperatumiveau vorliegenden Restwärme in dem den Luftvorwärmer verlassenden Rauchgas, sei es durch Wiederaufheizung der gereinigten Rauchgase vor Eintritt in den Kamin, oder sei es durch Auskoppelung von Wärme für Femwärmezwecke, vorhanden ist, diese in der Rauchgasentschwefelungsanlage vemichtet wird, was zu einer weiteren Verringerung des Gesamtwirkungsgrades der Dampfkraftanlage führt.

Die GB-A-213 8 555 zeigt eine Dampfkraftanlage zur Erzeugung elektrischer Energie, bei der im Rauchgas noch enthaltene Überschußwärme, die nicht zur Vorerwärmung der dem Kessel zuströmenden Frischluft benötigt wird, über Wärmekreisläufe auf zu erhitzende Medien übertragen wird. Dabei kommt für die Übertragung von Wärme unter höherer Temperatur aus dem Bereich des Luftvorwärmers als Wärmeträgermedium Luft und für die Übertragung von Niedrigtemperaturwärme vor Eintritt des Rauchgases in die Rauchgasentschwefelungsanlage als Wärmeträger ein flüssiges Medium zur Anwendung.

Zielsetzung der genannten Druckschrift ist es in erster Linie, Wärme für die Wiederaufheizung der naßentschwefelten Rauchgase vor Eintritt in den Kamin zur Verfügung zu stellen. Mit Wärme, die aus dem Bereich des Luvos ausgekoppelt wird und auf einem höheren Temperatumiveau anfällt als dies zur Wiederaufheizung der entschwefelten Rauchgase erforderlich ist, wird gemäß der Entgegenhaltung zusätzlich in einem Wärmetauscher noch Dampf für nicht näher erläuterte Zwecke erzeugt.

Es liegt auf der Hand, daß diese Dampferzeugung mit erheblichen Exergieverlusten verbunden ist, da aufgrund der relativ hohen Temperatur der die Wärme abgebenden Kreislaufluft und der konstanten Temperatur der Wärmeaufnahme durch verdampfendes Wasser sich bei der Wärmeübertragung eine relativ große Temperaturdifferenz einstellt. Derartige Temperaturdifferenzen führen zu Exergieverlusten und damit zu einer Verschlechterung des Wirkungsgrades.

Die DE-A-41 16 356 bezieht sich auf einen kombinierten Gas-Dampf-Prozeß, bei dem elektrische Energie sowohl in einem Gasturbinenkreislauf als auch in einem Dampfturbinenkreislauf erzeugt wird. Die thermodynamische Verknüpfung der beiden Kreisläufe erfolgt durch Einleitung des noch heißen Abgases der Gasturbine in den Dampferzeuger des Dampfturbinenkreislaufes. Da der Gasturbinenkreislauf aufgrund des Arbeitsmittelbedarfs der Gasturbine mit hohem Luftüberschuß betrieben werden muß, kann der Restsauerstoff im Abgas der Gasturbine zur Aufrechterhaltung der Verbrennungsreaktionen im Dampferzeuger genutzt werden. Dadurch entfällt die sonst übliche Zufuhr von Frischluft direkt in den Dampferzeuger. Darüberhinaus entfällt durch diese Verfahrensweise aber auch der sonst übliche Luftvorwärmer, in dem das heiße Rauchgas des Dampferzeugers im Wärmetausch mit der Gesamtmenge der der Feuerung zuzuführenden Frischluft abgekühlt wird.

Da bei derartigen kombinierten Prozessen ein Luftvorwärmer nicht benötigt wird, kann der Wärmeinhalt des Rauchgases nur durch direkte Einkoppelung in den Wasser-Dampf-Kreislauf des Kraftwerkes genutzt werden. Dabei treten Probleme mit Ablagerungen der im Rauchgas mitgeführten Schadstoffe in den entsprechenden Wärmetauschern auf. Zur Lösung dieser Problematik wird in der Entgegenhaltung vorgeschlagen, die im Rauchgas enthaltene Wärme über einen zwischengeschalteten Wärmeträgerkreislauf mit Luft als Wärmemedium vom Rauchgas direkt auf den Wasser-Dampf-Kreislauf zu übertragen. Sofem für die Feuerung des Dampferzeugers neben dem Abgas der Gasturbine weitere warme Frischluft in geringen Mengen benötigt wird, kann diese Frischluft ebenfalls in dem Rauchgas-Luft-Wärmetauscher mit erwärmt werden.

Der Erfindung liegt die Aufgabe zugrunde, bei einer Anlage der eingangs genannten Art, Energieverluste zu verringern und die Wärmenutzung des Rauchgases zu verbessern.

Diese Aufgabe wird bei einer Dampfkraftanlage der eingangs genannten Art dadurch gelöst, daß im ersten Wärmetauschersystem die abgegebene Wärme ausschließlich überwiegend auf Hochdruckspeisewasser und restlich auf Niederdruckspeisewasser des Wasser-Dampf-Kreislaufes übertragbar ist und innerhalb des zweiten Wärmetauschersystems Restwärme des Rauchgases ausschließlich auf Frischluft übertragbar ist.

Die gemäß der Erfindung vorgeschlagenen Maßnahmen führen zu einer im Vergleich zum Stand der Technik deutlichen Reduzierung von Exergieverlusten im Luftvorwärmer, zu einer wesentlich verbesserten Nutzung der im Rauchgas enthaltenen Wärme und somit zu einer deutlichen Erhöhung des Gesamtwirkungsgrades einer derartigen Dampfkraftanlage. Mit dem Rezirkulationsluftstrom des ersten Wärmetauschersystems, der der Frischluft im Bereich des Luftvorwärmers überlagert wird, gelingt eine weitgehende Angleichung der Wärmestromkapazitäten in den beiden Wärmetauscherquerschnitten des Luftvorwärmers mit der Folge kleiner Temperaturdifferenzen sowohl am warmen als auch am kalten Ende und entsprechend verringerten Exergieverlusten. Eine Teilmenge der im Luftvorwärmer freigesetzten Rauchgaswärme, die bei der herkömmlichen Schaltung auf relativ kalte Frischluft übertragen wurde, wird jetzt über den Rezirkulationsluftstrom und das erste Wärmetauschersystem auf höherem Temperaturniveau direkt in den Wasser-Dampf-Kreislauf des Kraftwerkes eingekoppelt.

Da gemäß der Erfindung mit dem Rezirkulationsluftstrom ein Regulativ zur Einstellung des Gleichgewichtes der Wärmestromkapazitäten zwischen den beiden Querschnitten im Luftvorwärmer zur Verfügung steht, kann die Frischluft auch vorgewärmt dem Luftvorwärmer zugeführt werden, d. h. auch die im Rauchgas vor der Entschwefelung noch enthaltene Restwärme kann durch die gemäß der Erfindung vorgesehenen Übertragung auf die Frischluft in dem zweiten Wärmetauschersystem nunmehr im Gesamtprozeß genutzt werden mit der Folge einer weiteren Verbesserung des Wirkungsgrades.

Die Erfindung erweist sich bei Dampfkraftanlagen als besonders vorteilhaft, bei denen die entschwefelten kalten Rauchgase unmittelbar in den Kühlturm der Dampfkraftanlage eingeleitet und zusammen mit der Kühlluft in die Atmosphäre ausgetragen werden und eine Auskoppelung von Rauchgasrestwärme für Fernwärmezwecke oder sonstige Zwecke nicht vorgesehen ist. In diesem Falle kann durch die erfindungsgemäße Schaltung die im Rauchgas noch enthaltene Restwärme in vollem Umfang unter thermodynamisch günstigen Bedingungen dem Kreislaufprozeß der Dampfkraftanlage emeut zugeführt werden.

Im Grunde ist es durch die erfindungsgemäße Anlagenkonzeption generell möglich, in einer Dampfkraftanlage anfallende Niedertemperaturwärme durch Übertragung auf die Frischluft und Einkoppelung in den Luftvorwärmer auf höheres Temperaturniveau anzuheben und dem Wasser-Dampf-Kreislauf erneut zuzuführen.

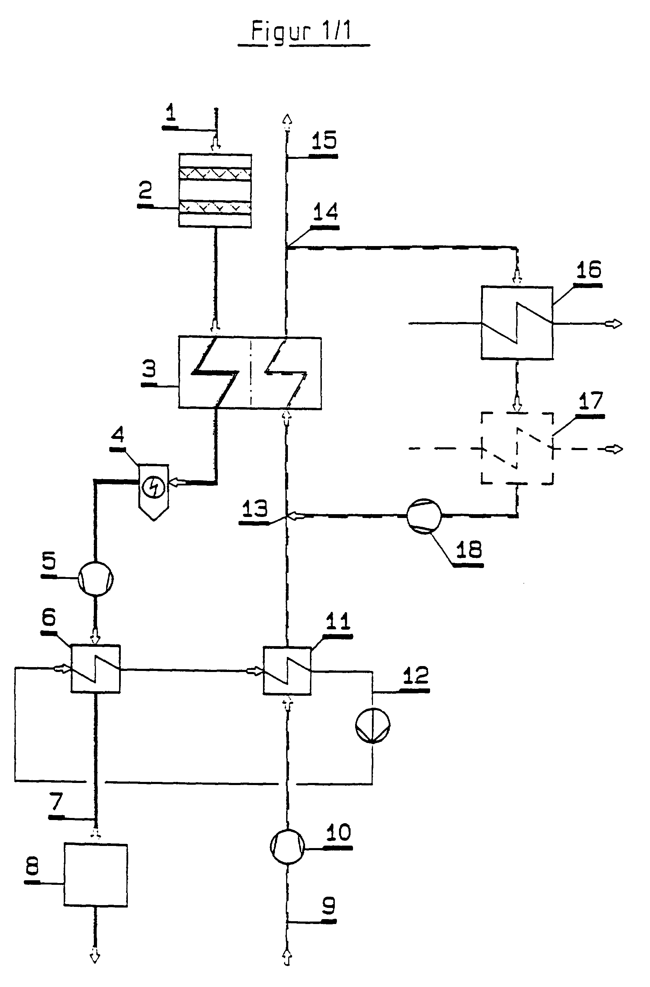

Weitere Erläuterungen zu der Erfindung sind dem in der Figur schematisch dargestellten Ausführungsbeispiel zu entnehmen.

Gemäß der Figur wird heißes Rauchgas aus einem Dampferzeuger eines Steinkohlenkraftwerkes über eine Leitung 1 zunächst einer Entstickungsanlage 2 und dann unter einer Temperatur von etwa 380 °C einem Luftvorwärmer 3 zugeführt. Im Luftvorwärmer 3 wird das Rauchgas im Wärmetausch mit Luft auf etwa 130 °C abgekühlt. Nach Passieren eines Elektrofilters 4 und eines Saugzuggebläses 5 erfolgt eine weitere Abkühlung von etwa 130 °C auf etwa 80 - 90 °C in einem Wärmetauscher 6 eines aus Wärmetauschern 6 und 11 sowie einem Kreislaufwassersystem 12 bestehenden zweiten Wärmetauschersystems. Anschließend wird das abgekühlte Rauchgas über eine Leitung 7 in eine Rauchgasentschwefelungsanlage 8 eingespeist und schließlich über den hier nicht dargestellten Kühlturm des Kraftwerkes zusammen mit der Kühlluft in die Atmosphäre abgeleitet.

Die im Dampferzeuger benötigte Verbrennungsluft wird über eine Leitung 9 und ein Gebläse 10 dem Kraftwerk zugeführt und zunächst in einem Wärmetauscher 11 auf eine Temperatur von etwa 70 - 80 °C vorgewärmt. Die zur Vorwärmung benötigte Wärme wird mittels eines geschlossenen Kreislaufwassersystems 12 vom Wärmetauscher 6 in den Wärmetauscher 11 übertragen.

Der im Wärmetauscher 11 vorgewärmten Frischluft wird an einer Mischstelle 13 Rezirkulationsluft zugemischt, dessen Temperatur und Massenstrom so bemessen sind, daß im Luftvorwärmer 3 sich in etwa ein Wärmestromgleichgewicht einstellt, d. h., daß sowohl am kalten als auch am warmen Ende des Luftvorwärmers nunmehr die gewünschten kleinen Temperaturdifferenzen zwischen dem Rauchgas und der Luft vorliegen.

Nach Passieren des Luftvorwärmers wird der Rezirkulationsluftstrom an einer Abzweigstelle 14 emeut von dem Frischluftstrom abgetrennt. Während die Frischluft unter einer Temperatur von 350 °C über eine Leitung 15 der Feuerung des Dampferzeugers zugeführt wird, wird die Rezirkulationsluft in einem ersten Wärmetauschersystem zunächst in einem Wärmetauscher 16 im Wärmetausch mit Hochdruckspeisewasser und, falls erforderlich, in einem weiteren Wärmetauscher 17 im Wärmetausch mit Niederdruckspeisewasser erneut abgekühlt und über ein regelbares Gebläse 18 wieder zur Mischstelle 13 gefördert.

## Patentansprüche

1. Dampfkraftanlage zur Erzeugung elektrischer Energie mit einem fossil befeuerten Kessel, einem Wasser-Dampf-Kreislauf zur Erzeugung von hochgespanntem, überhitztem Wasserdampf für eine Dampfturbine einem Luftvorwärmer (3) zur Übertragung von Rauchgaswärme auf die Gesamtmenge der benötigten Frischluft, sowie einem ersten Wärmetauschersystem (16, 17) mit einem von Rezirkulationsluft und einem von einem Wärmeträgermedium durchströmten Querschnitt, wobei der luftführende Querschnitt eingangsseitig (14) mit dem Frischluftausgang des Luftvorwärmers (3) und ausgangsseitig (13) mit dem Frischlufteingang des Luftvorwärmers (3) in Verbindung steht, einem zweiten Wärmetauschersystem (6, 11, 12) zur Übertragung zumindest eines Teiles der vor der Entschwefelung im Rauchgas noch enthaltenen Restwärme auf die Frischluft und mit Einrichtungen zur Entstaubung, Entschwefelung und ggf. Entstickung der Rauchgase, dadurch gekennzeichnet, daß im ersten Wärmetauschersystem die abgegebene Wärme ausschließlich überwiegend auf Hochdruckspeisewasser (16) und restlich auf Niederdruckspeisewasser des Wasser-Dampfkreislaufes übertragbar ist und innerhalb des zweiten Wärmetauschersystems (6, 11, 12) Restwärme des Rauchgases ausschließlich auf die Frischluft übertragbar ist.

2. Dampfkraftanlage nach Anspruch 1, dadurch gekennzeichnet, daß der Rezirkulationsluftstrom des ersten Wärmetauschersystems (16, 17) regelbar (18) ist.

3. Dampfkraftanlage nach den Ansprüchen 1 oder 2, dadurch gekennzeichnet, daß das zweite Wärmetauschersystem (6, 11, 12) als geschlossenes System mit Wasser als Wärmeträger ausgebildet ist.

## Claims

1. Steam power generating plant for generating electrical energy with a fossil fuel-fired boiler, a water steam circuit for generating high pressure superheated water vapour for a steam turbine, an air preheater (3) for transmitting flue gas heat to the total quantity of fresh air required, and a first heat exchanger system (16, 17) with a cross-section through which recirculated air flows and a cross-section trough which a heat-carrying medium flows, whereby the air-conveying cross-section is connected on the inlet side (14) to the fresh air outlet of the air preheater (3) and on the outlet side (13) to the fresh air inlet of the air preheater (3), a second heat exchanger system (6, 11, 12) for transmitting at least a part of the residual heat remaining in the flue gas prior to desulphurisation to the fresh air and with devices for removal of dust, removal of sulphur and where necessary removal of nitrogen from the flue gases, characterised in that in the first heat exchanger system the heat given off can be transmitted exclusively mainly to high pressure feed water (16) and for the remainder to low pressure feed water of the water steam circuit and within the second heat exchanger system (6, 11, 12) residual heat from the flue gas can be transmitted exclusively to the fresh air.

2. Steam power generating plant according to claim 1, characterised in that the stream of recirculated air of the first heat exchanger system (16, 17) can be regulated (18).

3. Steam power generating plant according to claims 1 or 2, characterised in that the second heat exchanger system (6, 11, 12) takes the form of a closed system with water as the heat-carrying medium.

## Revendications

1. Installation d'énergie à vapeur servant à produire de l'énergie électrique, comprenant une chaudière chauffée par un combustible fossile, un circuit eau/vapeur servant à produire de la vapeur d'eau surchauffée à haute pression pour une turbine à vapeur, un préchauffeur d'air (3) servant à transmettre la chaleur des gaz de la combustion à toute la quantité d'air frais nécessaire, ainsi qu'un premier système d'échangeur de chaleur (16, 17) avec une section transversale traversée par de l'aire de recyclage et une section transversale traversée par un fluide caloporteur, la section transversale dans laquelle passe L'air étant en liaison du côté de l'entrée (14) avec la sortie de l'air frais du préchauffeur d'air (3) et du côté de la sortie (13) avec l'entrée de l'air frais du préchauffeur d'air (3), un deuxième système d'échangeur de chaleur (6, 11. 12) qui sert à transmettre à l'air frais au moins une partie de la chaleur résiduelle qui est encore contenue avant la désulfuration dans les gaz de la combustion, et avec des systèmes de dépoussiérage, de désulfuration et le cas échéant de dénitruration des gaz de la combustion,
caractérisée en ce que
dans le premier système d'échangeur de chaleur on peut transmettre la chaleur délivrée exclusivement de façon prépondérante à l'eau d'alimentation à haute pression (16) et pour le reste à l'eau d'alimentation à basse pression du circuit eau/vapeur et on peut transmettre à l'intérieur du second système d'échangeur de chaleur (6, 11, 12) la chaleur résiduelle des gaz de la combustion exclusivement à l'air frais.

2. Installation d'énergie à vapeur selon la revendication 1,
caractérisée en ce que
l'on peut régler le flux d'air de recyclage du premier système d'échangeur de chaleur (16, 17).

3. Installation d'énergie à vapeur selon les revendications 1 ou 2,
caractérisée en ce que
le deuxième système d'échangeur de chaleur (6, 11, 12) est constitué sous la forme d'un système fermé avec de l'eau comme fluide caloporteur.
